# EUROPÄISCHE PATENTSCHRIFT

(11) **EP 1 038 451 B1**
(45) Veröffentlichungstag und Bekanntmachung des Hinweises auf die Patenterteilung: **12.07.2006**
(21) Anmeldenummer: 00100701.2
(22) Anmeldetag: 14.01.2000
(51) Int. Cl.: A23L 3/18, B65B 55/02, A23L 3/04

(54) **Verfahren zum Betreiben einer Pasteurisierungsanlage**
Method for operating a pasteurization plant
Méthode pour le fonctionnement d'une installation de pasteurisation

(30) Priorität: 24.02.1999 DE 19908035
(43) Veröffentlichungstag der Anmeldung: 27.09.2000
(73) Patentinhaber: KHS AG, 44143 Dortmund (DE)
(72) Erfinder: Strohn, Gisbert, 58313 Herdecke (DE); Molitor, Bernd, 67551 Worms (DE); Wiedemann, Ulrich, 44135 Dortmund (DE); Dittrich, Falk, 45145 Essen (DE)

(56) Entgegenhaltungen:
- EP-A- 0 204 138
- EP-A- 0 430 907
- EP-A- 0 960 574
- WO-A-96/02626
- DE-A- 3 029 113
- DE-B- 1 093 185
- FR-A- 2 520 984
- US-A- 2 282 187
- US-A- 4 279 858
- US-A- 4 331 629
- US-A- 4 354 357
- US-A- 4 490 401
- US-A- 4 704 958
- US-A- 4 727 800
- US-A- 5 750 174
- US-A- 5 772 958

## Beschreibung

Die Erfindung bezieht sich auf ein Verfahren zum Betreiben einer Pasteurisierungsanlage zum Pasteurisieren von Produkten in Behältern gemäß Oberbegriff des Anspruchs 1 sowie auf eine zur Durchführung des Verfahrens geeignete Vorrichtung.

In der Getränkeindustrie ist es insbesondere bei leicht verderblichen Gütern üblich, diese zu pasteurisieren. Bei bekannten Pasteurisierungsanlagen werden dabei die Behälter mit den Produkten in praktisch gleichmäßiger Bewegung vom Eingangsbereich zum Ausgangsbereich gefördert. Während dieser Bewegung werden sie aufgeheizt, bis sie die gewünschten Pasteurisierungseinheiten aufgenommen haben, danach gekühlt, womit der Pasteurisierungsvorgang beendet ist. Ein dazu vorgesehener Pasteurisierungstunnel hat demzufolge einen Aufheizabschnitt, einen Überhitzungs- und Pasteurisierungsabschnitt mit einem nachfolgenden Abkühlabschnitt. Die einzelnen Abschnitte können weitere Unterzonen aufweisen. Die dadurch sichergestellte allmähliche Aufheizung und Abkühlung wird insbesondere bei in der Getränkeindustrie verwendeten Glasflaschen vorgezogen, um durch abrupte Temperaturänderungen ein Zerstören der Glasflaschen zu vermeiden. Die Wärmeübertragung auf das in den Behältern enthaltene Produkt geschieht normalerweise durch Besprühen dieser Behälter mit Wasser, die auf einem Förderband, welches die Sprühflüssigkeit nach unten durchtreten läßt, fortbewegt werden. Unter dem Förderband sind Auffangbehälter für die Sprühflüssigkeit angebracht, aus denen die Pumpen für die Besprühung gespeist werden. Zwischen den aufzuheizenden und abzukühlenden Abschnitten kann mit der Sprühflüssigkeit zonenweise Wärme ausgetauscht werden.

Um eine optimale Abstufung der Temperaturen in den einzelnen Abschnitten reichen zu können, sind diese entsprechend unterteilt. Meist weist der Abschnitt "Aufheizen" drei bis vier einzelne Zonen auf, das Pasteurisierungsgebiet zwei oder drei Zonen, wobei noch eine Überhitzungszone vor der Pasteurisierungszone vorgesehen sein kann. Der anschließende Abschnitt "Abkühlen" weist wiederum drei bis vier Einzelzonen auf, in welchen die Behälter durch eine schrittweise abnehmende Temperatur der Sprühflüssigkeit bis zur gewünschten Ausgangstemperatur abgekühlt werden.

Die jeweils eingestellten Sprühtemperaturen sind genau dem Produkt, den Längen der Zonen und der Geschwindigkeit des Transporteurs angepaßt, damit sichergestellt ist, daß das in den Behältern befindliche Produkt den vorgeschriebenen Pasteurisierungsgrad erreicht.

In der Technik wurden zahlreiche Ausgestaltungen von Pasteurisationsanlagen bekannt. So wurde z.B. durch die US 4,490,401 eine Anlage vorgestellt, welche zur Vermeidung von Überpasteurisation vorsieht, die Behälter mit kaltem Wasser zu überströmen, wobei insbesondere die Verwendung von Wärmepumpen und/oder Wärmetauschern vorgesehen ist. Ebenfalls schlägt diese Schrift die Verwendung von getrennten Tanks für warmes und kaltes Wasser vor, wobei der Temperaturunterschied zwischen diesen Tanks mittels einer Wärmepumpe erzeugt werden soll.

Ebenfalls bekannt wurde eine Vorrichtung nach der US-A-4 279 858, wobei diese Schrift eine Pasteurisierungsanlage vorschlägt, bei weicher die Regelung der Spritzungstemperatur bzw. des Pasteurisationsprozesses durch das Zuführen von gekühltem Wasser oder Dampf erfolgt. Besondere Maßnahmen zur Energieeinsparung, wie z.B. Speichertanks für warmes oder kaltes Wasser sieht diese Schrift nicht vor.

Die DE 30 29 113 A schlägt eine Vorrichtung vor, bei welcher dem Pasteurisationsprozess kontinuierlich eine Menge kühlem Leitungswasser zugeführt werden muss.

Die US-A-4 727 800 beschreibt einen Pasteurisationsprozess besonderer Präzision, bei welchem die notwendigen Sprühdüsen in einer besonders vorteilhafte Art und Weise angeordnet werden sollen. Zusätzlich stellt diese Schrift die Vorteile einer doppelstöckigen Ausbildung eines Pasteurs dar.

Durch die EP A- 0 430 907 wurde eine Vorrichtung zur Notfallabkühlung von außerhalb der eigentlichen der Pasteurisationszone befindlichen Flaschen vorgestellt, wobei durch mehrere Tanks, mehrere Pumpen und vorteilhafte Flüssigkeitsführung versucht wird, wasser möglichst hoher Temperatur zu speichern.

Eine weitere Vorrichtung wurde durch die US-A-4 704 958 vorgestellt. Auch diese Vorrichtung verwendet das übliche Verfahren des Flüssigkeitsaustausches zwischen Anwärm- und Abkühlzonen. Weitere Vorschläge zur Energiereinsparung werden durch diese Schrift nicht unterbreitet.

Eine Vorrichtung zur Vermeidung von Überpasteurisation stellt die EP A 0 204 138. Dabei wird die Temperatur des Hauptsprühflusses überwacht. Bei Überschreitung eines Sicherheitsgrenzwertes wird ein System aktiviert, welches die Flaschen mit, aus den Drainagewannen gewonnenem Umwälzfluid besprüht.

Die US-A- 2 282 187 stellt ein Verfahren zur Pasteurisation von Behältern vor, bei weichem eine besonders geringe Menge von Flüssigkeit ausreichend ist. Ebenfalls befasst sich diese Schrift mit der Verwendung unterschiedlicher Flüssigkeiten für das Heizen und Kühlen der Behälter.

Da ein solcher Pasteurisierapparat jedoch in einer kompletten Abfüllanlage installiert ist und nur einen Teil dieser Anlage darstellt, treten Störungen bei der kontinuierlichen Zufuhr, also eine Lücke im Behälterstrom, oder Störungen bei der Abfuhr der Behälter, also ein Produktionsstop, mehr oder weniger häufig auf. Die Folge eines Produktionsstops ist, daß die Produkte, die momentan die Pasteurisationstemperatur haben, nach einiger Zeit durch Überpasteurisierung geschmacklich beeinträchtigt werden.
Eine Lücke im Behälterstrom oder auch das Leerfahren der Anlage hat zur Folge, daß das wärmetechnische Gleichgewicht zwischen aufzuheizenden und abzukühlenden Produkten so gestört wird, daß zunächst die Produkte die Anlage mit zu hoher Auslauftemperatur verlassen, später die pasteurisierten Produkte nicht mehr schnell genug abgekühlt werden und schließlich die in den Pasteurisierabschnitt einlaufenden Produkte nicht mehr die erforderliche Pasteurisationstemperatur haben.
Die beschriebenen Folgen einer Produktionsstörung werden durch gezielte Zufuhr oder Abfuhr von Wärmeenergie vermieden. Üblicherweise wird die Wärme entweder indirekt über Wärmeaustauscher dem Prozeß zugeführt oder heißes Wasser wird direkt aus einer zentralen Wärmequelle zugeführt und mit kälterer Temperatur zurückgeleitet. Die Wärmeabfuhr aus dem Prozeß wird bekanntlich durch Zufuhr von kalter Flüssigkeit, die mit höherer Temperatur wieder abgeführt wird, realisiert.

Der Erfindung liegt die Aufgabe zugrunde, ein Verfahren zum Betreiben einer solchen Pasteurisationsanlage vorzuschlagen, mit welchem unter Minimierung der Ressourcen Wasser und Wärme Störungen im Behälterstrom in optimaler Weise bewältigt werden können.

Charakteristisch für den Prozeß ist, daß jede zur Regelung erforderliche Wärmezufuhr zeitlich versetzt eine Wärmeabfuhr (und umgekehrt) in gleicher Größenord-nung nach sich zieht. Daher sind Vorschläge zur Speicherung der Wärme naheliegend und bekannt.

Nachteilig ist bei den bekannten Verfahren jedoch, daß durch Sammlung der aus der Anlage überlaufenden Flüssigkeit in einem Kanal oder mehreren Speicherbehältern eine Vermischung der Temperatur so stattfindet, daß die sich im Speicher einstellende Temperatur der Flüssigkeit weder zum gezielten Kühlen noch zum gezielten Heizen verwendbar ist. Weiterhin ist nachteilig, daß zwar auf niedrigem Temperaturniveau Wärme gespeichert wird, jedoch Flüssigkeit zur Kühlung nicht gewonnen werden kann, also eine Wassereinsparung nicht erfolgt.

Diese Nachteile werden erfindungsgemäß dadurch behoben, daß die durch den Einstellprozeß den Zonen zugeführte, im Verfahren überschüssige Flüssigkeit im Abschnitt "Aufwärmen" (2) kaskadenförmig von Zone zu Zone steigender Überschüttungstemperatur und im Abschnitt "Abkühlen" (4) kaskadenförmig von Zone zu Zone fallender Überschüttungstemperatur überströmt und von der jeweils letzten, also von der heißesten Zone (7) im Abschnitt "Aufwärmen" in einen warmen Flüssigkeitsspeicher (13) überströmt und von der kältesten Zone (10) im Abschnitt "Abkühlen" in einen kalten Flüssigkeitsspeicher (14) überströmt sowie die durch den Einstellprozeß zugeführte, im Verfahren überschüssige Flüssigkeit im Abschnitt "Pasteurisieren" von den Zonen in einen heißen Flüssigkeitsspeicher (15) überströmt.

In eigenständiger Ausbildung der Erfindung wird ferner vorgeschlagen, daß die im kalten Flüssigkeitspeicher (14) enthaltene Flüssigkeit zwangsgesteuert zum Kühlen mindestens der Zonen im Abschnitt "Kühlen" und im Abschnitt "Pasteurisieren", die im warmen Flüssigkeitsspeicher (13) enthaltene Flüssigkeit zwangsgesteuert zum Heizen mindestens der Zonen im Abschnitt "Aufwärmen" oder zum Kühlen der Zonen im Abschnitt "Pasteurisieren" und die im heißen Flüssigkeitsspeicher enthaltene Flüssigkeit nach Zufuhr von Wärmeenergie zwangsgesteuert zum Heizen mindestens der Zonen im Abschnitt "Pasteurisieren" verwendbar ist.

Weitere Merkmale der Erfindung ergehen aus den Unteransprüchen sowie dem Vorrichtungsanspruch.

Durch den Einsatz der vorliegenden Erfindung wird das kalte Wasser am Anfangsbereich des Aufwärmabschnitts allmählich auf die jeweils höhere Betriebstemperatur der nachfolgenden Zonen erwärmt und das im Abkühlabschnitt eingesetzte Wasser wiederum allmählich entsprechend der Temperatur der Einzelzonen heruntergekühlt, was zu einem besonders vorteilhaften Energieeinsatz führt. Darüber hinaus kann bei Eintreten eines Störfalles die jeweils in den Behältern gehaltene Wassermenge zum schnellen Abkühlen der kritischen Zonen wie auch zum schnellen Aufwärmen dieser und der weiteren Zonen in Anspruch genommen werden, wodurch beispielsweise der Frischwasserverbrauch erheblich vermindert wird.

Im nachfolgenden wird die Erfindung anhand einer ein Ausführungsbeispiel darstellenden Zeichnung näher erläutert.

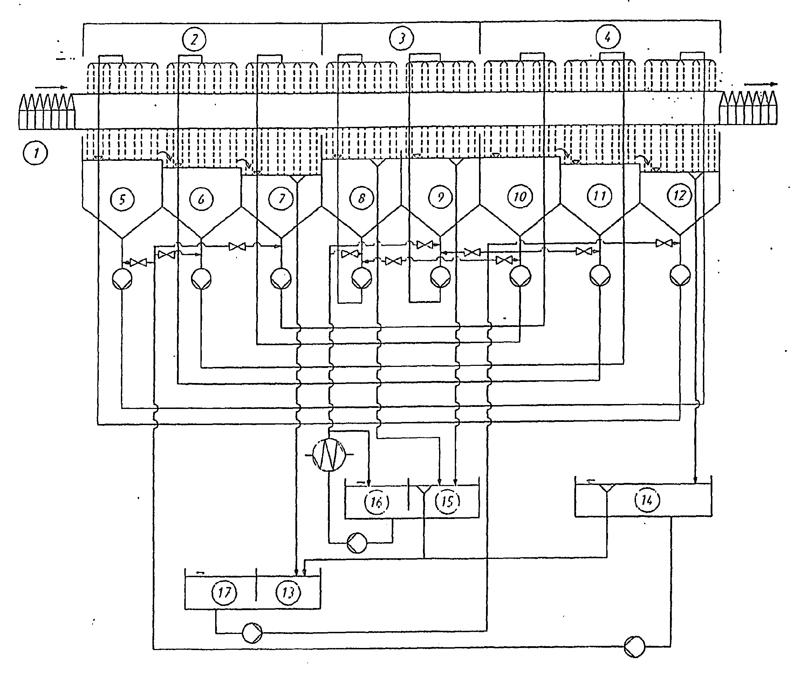

Wie aus der Zeichnung ersichtlich, besteht die Pasteurisierungsanlage aus einem in Durchlaufrichtung der jeweiligen Behälter 1 im Anfangsbereich angeordneten Aufwärmabschnitt 2, der wiederum aus einer Vielzahl von Einzelzonen 5-7 bestehen kann, wobei die Aufwärmphase entsprechend schonend vorgenommen wird. Diesem Aufwärmabschnitt 2 schließt sich eine Überhitzungszone 8 an, dieser folgt die eigentliche Pasteurisierzone 9. Anschließend beginnt der Bereich des Abkühlabschnitts 4, der, wie auch bei den anderen Abschnitten, aus einer größeren Anzahl von Einzelzonen 10-12 bestehen kann.

Das Betriebsprogramm einer solchen Pasteurisierungsanlage wird zunächst für den Pasteurisierungsbetrieb unter optimalen Bedingungen ausgelegt. So ist beispielsweise vorgesehen, daß die erste Aufwärmzone 5 eine Besprühungstemperatur von 18°C aufweist. Entsprechend ist die Ausgangstemperatur der pasteurisierten Produkte mit einer Besprühungstemperatur von etwa 17°C vorgesehen. Die zweite Aufwärmzone 6 weist eine Besprühungstemperatur von geringfügig oberhalb 24°C auf, wobei die damit kommunizierende Abkühlzone wiederum etwas geringer bei 23°C liegen kann. Am Beispiel dieser beiden Zonen ist erkennbar, daß das Wasser aus den Zonen "Abkühlen" 4 jeweils der Zone im Abschnitt "Aufwärmen" 2 zugeleitet wird, deren gewollte Aufheiztemperatur der gewollten Abkühltemperatur am nächsten kommt. Zur Ausgleichung der jeweiligen Temperaturdifferenz wird dem Wasser aus dem Abkühlabschnitt 4 vorzugsweise Wasser aus dem ersten Tank 13 in geringfügigen Mengen zugegeben, dessen Wasser höherer Temperatur aus der letzten Station 7 des Aufwärmabschnitts 2 stammt. Im Anschluß an diesen Aufwärmabschnitt befindet sich die Überhitzungszone 8, deren Temperatur wiederum höher als die der Temperatur der letzten Aufwärmzone 7 ist und aus einem zweiten Behälter 15 mit gegenüber dem ersten Behälter 13 höhere Temperatur gespeist wird. Dem zweiten Behälter 15 ist ein dritter Behälter 16 zugeordnet, dem das Überschußwasser des Behälters 15 zugeleitet wird. Dieser dritte Behälter 16 wird zudem mittels einer Aufheizeinrichtung auf einer vorbestimmbaren höheren Temperatur gehalten. Aus diesem Behälter 16 wird auch die Überhitzungs- und Pasteurisierungszone 8, 9 beaufschlagt, wobei die ablaufende heiße Wassermenge in dem zweiten Behälter 15 gesammelt und mit dem Heißwasser des dritten Behälters 16 vermischt wird.

Bei einer auftretenden Störung, beispielsweise hervorgerufen durch einen Behälterrückstau in der Pasteurisierungsanlage, wird durch eine nicht weiter dargestellte Steuereinrichtung eine sofortige Ansteuerung bestimmter Ventile vorgenommen, so daß beispielsweise das Wasser geringerer Temperatur aus dem ersten Behälter 13 der Überhitzungs- und/oder Pasteurisierungszone 8, 9 zugeführt wird. Den anderen Abschnitten 2, 4 kann ebenfalls Wasser geringerer Temperatur, beispielsweise aus einem weiteren vierten Behälter 14 zugegeben werden.

## Patentansprüche

1. Verfahren zur Pasteurisierung von Produkten in Behältern in einem kontinuierlichen Behälterstrom (1) durch ortsfeste, aufeinanderfolgende Abschnitte zum Aufwärmen (2), Pasteurisieren (3) und Abkühlen (4) mit Hilfe von überschüttender Flüssigkeit, wobei die Abschnitte zueinander in ihrer Flüssigkeitstemperatur gestuft sind und zur Wärmerekuperation je paarweise ablaufende Flüssigkeit einer Zone "Aufwärmen" zum Überschütten in einer Zone "Abkühlen" und die ablaufende Flüssigkeit dieser Zone "Abkühlen" zum Überschütten in der Zone "Aufwärmen" gefördert wird und zum Einstellen der gewollten Überschüttungstemperatur heißere oder kältere Flüssigkeit in die geförderte Flüssigkeit zugegeben wird, ***dadurch gekennzeichnet,* daß** die durch den Einstellprozess den Zonen zugeführte, im Verfahren überschüssige Flüssigkeit im Abschnitt "Aufwärmen" (2) kaskadenförmig von Zone zu Zone steigender Überschüttungstemperatur und im Abschnitt "Abkühlen" (4) kaskadenförmig von Zone zu Zone fallender Überschüttungstemperatur überströmt und von einer der letzten, also der heißesten Zone (7) im Abschnitt "Aufwärmen" (2) in einen warmen Flüssigkeitsspeicher (13) und von der kältesten Zone (12) im Abschnitt "Abkühlen" in einen kalten Flüssigkeitsspeicher (14) überströmt sowie die durch den Einstellprozess den Zonen zugeführte, im Verfahren überschüssige Flüssigkeit im Abschnitt "Pasteurisieren" (3) von den Zonen in einen heißen Flüssigkeitsspeicher (15) überströmt.

2. Verfahren gemäß Oberbegriff des Anspruchs 1, ***dadurch gekennzeichnet,* daß** die im kalten Flüssigkeitsspeicher (14) enthaltene Flüssigkeit zwangsgesteuert zum Kühlen mindestens der Zonen im Abschnitt "Kühlen" (4) und im Abschnitt "Pasteurisieren" (3), die im warmen Flüssigkeitsspeicher (13) enthaltene Flüssigkeit zwangsgesteuert zum Heizen mindestens der Zonen im Abschnitt "Aufwärmen" (2) oder zum Kühlen der Zonen im Abschnitt "Pasteurisieren" (3) und die im heißen Flüssigkeitsspeicher (15) enthaltene Flüssigkeit nach Zufuhr von Wärmeenergie zwangsgesteuert zum Heizen mindestens der Zonen im Abschnitt "Pasteurisieren" (3) verwendbar ist.

3. Verfahren gemäß den vorhergehenden Ansprüchen, ***dadurch gekennzeichnet,* daß** der kalte Flüssigkeitsspeicher (14) in den warmen Flüssigkeitsspeicher (13) überströmen kann.

4. Verfahren gemäß den vorhergehenden Ansprüchen, ***dadurch gekennzeichnet,* daß** der heiße Flüssigkeitsspeicher (15) in den warmen Flüssigkeitsspeicher (13) überströmen kann.

5. Verfahren gemäß den vorhergehenden Ansprüchen, ***dadurch gekennzeichnet,* daß** der warme Flüssigkeitsspeicher (13) und der heiße Flüssigkeitsspeicher (15) in Strömungsrichtung unterteilt sind.

6. Verfahren gemäß den vorhergehenden Ansprüchen, ***dadurch gekennzeichnet,* daß** dem warmen und heißen Flüssigkeitsspeicher (13, 15) je ein weiterer Behälter (16, 17) zum Überlaufen der Flüssigkeit zugeordnet ist.

7. Vorrichtung zur Durchführung des Verfahrens nach den vorhergehenden Ansprüchen mit einem Förderer und mehreren aufeinanderfolgenden Behandlungsabschnitten in einem Tunnelpasteur, ***dadurch gekennzeichnet,* daß** das Wasser der Aufwärmzonen (5-7) mindestens teilweise der jeweils folgenden Zone höherer Temperatur zugeleitet und spätestens vor der Überhitzungszone (8) in einen ersten Behälter (13) höherer Temperatur abgeleitet wird und das Wasser mindestens der Überhitzungszone (8) und/oder der Pasteurisierzone (9) einem zweiten Behälter (15) höherer Temperatur zuleitbar ist und dieser zweite Behälter (15) mit einem weiteren dritten Behälter (16) korrespondiert, der als Heißwasserbehälter mit einer Heizvorrichtung ausgebildet ist und ein vierter Behälter (14) vorgesehen ist, dem das Wasser aus der Abkühlzone (12) zugeleitet wird, wobei dieses Wasser zwangsgesteuert auch der Aufwärmzone (5) zuleitbar ist und das Wasser des dritten Behälters (16) mindestens der Überhitzungs- und/oder Pasteurisierzone (8, 9) zuleitbar ist.

## Claims

1. Method for pasteurising products in containers in a continuous container flow (1) through stationary, consecutive sections for heating (2), pasteurizing (3) and cooling (4) by means of overflowing liquid, wherein the sections are graduated with respect to one another in terms of their liquid temperature and, for the recycling of the heat, are organised respectively in pairs, so that liquid is discharged from one "heating" zone to overflow in a "cooling" zone and the liquid discharged from this "cooling" zone is conveyed to overflow in the "heating" zone, and, to adjust the desired overflow temperature, hotter or colder liquid is added to the conveyed liquid, **characterised in that** the excess liquid in the method, supplied to the zones by means of the adjusting process, in the "heating" (2) section overflows in a cascade manner from zone to zone of increasing overflow temperature and in the "cooling" (4) section overflows in a cascade manner from zone to zone of reducing overflow temperature and from one of the latter, that-is-to-say from the hottest zone (7) in the "heating" (2) section overflows into a hot liquid store (13) and from the coldest zone (12) in the "cooling" section overflows into a cold liquid store (14), and the excess liquid in the method, supplied to the zones by means of the adjusting process, in the "pasteurising" (3) section overflows from the zones into a hot liquid store (15).

2. Method according to the main preamble of claim 1, **characterised in that** the liquid contained in the cold liquid store (14) is useable in a positive controlled manner to cool at least the zones in the "cooling" (4) section and in the "pasteurising" (3) section, the liquid contained in the warm liquid store (13) is useable in a positive controlled manner to heat at least the zones in the "heating" section (2) or to cool at least the zones in the "pasteurising" (3) section and the liquid contained in the hot liquid store (15) is useable after the supply of heat energy in a positive controlled manner to heat at least the zones in the "pasteurising" (3) section.

3. Method according to the preceding claims, **characterised in that** the cold liquid store (14) can overflow into the warm liquid store (13).

4. Method according to the preceding claims, **characterised in that** the hot liquid store (15) can overflow into the warm liquid store (13).

5. Method according to the preceding claims **characterised in that** the warm liquid store (13) and the hot liquid store (15) are divided in the direction of flow.

6. Method according to the preceding claims, **characterised in that** an additional container (16, 17) is associated with each of the warm and hot liquid stores (13, 15) for the overflowing of the liquid.

7. Apparatus for the accomplishment of the method in accordance with the preceding claims, the said apparatus having a conveyor and a plurality of consecutive treatment sections in a tunnel pasteurizer, **characterised in that** the water of the heating zones (5 - 7) is conducted at least partially to the respective following zone of a higher temperature and is diverted into a first container (13) of a higher temperature at the latest before the overheating zone (8) and the water at least of the overheating heating zone (8) and/or of the pasteurizing zone (9) can be conducted into a second container (15) of a higher temperature and this second container (15) corresponds with a third container (16), which is in the form of a hot water container with a heating device, and a fourth container (14) is provided, to which the water from the cooling zone (12) is conducted, wherein this water can be conducted in a positively controlled manner also to the heating zone (5) and the water of the third container (16) can be conducted at least to the overheating and/or pasteurizing zone (8, 9).

## Revendications

1. Procédé de pasteurisation de produits dans des récipients dans un flux de récipients (1) continu par le biais de sections consécutives fixes destinées à chauffer (2), pasteuriser (3) et refroidir (4) à l'aide d'un liquide d'arrosage, les sections étant échelonnées les unes par rapport aux autres dans leur température du liquide tandis que, pour récupérer la chaleur, chaque liquide s'écoulant par paire est transporté d'une zone "Chauffage" pour arrosage dans une zone "Refroidissement" et le liquide s'écoulant de cette zone "Refroidissement" est transporté pour arrosage dans la zone "Chauffage" et pour régler la température d'arrosage souhaitée, un liquide plus chaud ou plus froid est ajouté dans le liquide transporté, **caractérisé en ce que** le liquide en surplus dans le procédé amené dans les zones par le processus de réglage s'écoule dans la section "Chauffage" (2) en cascade d'une zone à l'autre avec une température d'arrosage qui augmente et s'écoule dans la section "Refroidissement" (4) en cascade d'une zone à l'autre avec une température d'arrosage qui diminue et s'écoule d'une des dernières zones, qui est également la zone la plus chaude (7) dans la section "Chauffage" (2) dans un réservoir de liquide chaud (13) et de la zone la plus froide (12) dans la section "Refroidissement" dans un réservoir de liquide froid (14) et le liquide en surplus dans le procédé amené dans les zones par le processus de réglage s'écoule des zones dans la section "Pasteurisation" (3) dans un réservoir de liquide brûlant (15).

2. Procédé selon le préambule de la revendication 1, **caractérisé en ce que** le liquide contenu dans le réservoir de liquide froid (14) peut être utilisé de façon forcée pour refroidir au moins les zones dans la section "Refroidissement" (4) et dans la section "Pasteurisation" (3), le liquide contenu dans le réservoir de liquide chaud (13) peut être utilisé de façon forcée pour chauffer au moins les zones dans la section "Chauffage" (2) ou pour refroidir les zones dans la section "Pasteurisation" (3) et le liquide contenu dans le réservoir de liquide brûlant (15) peut être utilisé de façon forcée après l'arrivée d'énergie thermique pour chauffer au moins les zones dans la section "Pasteurisation" (3).

3. Procédé selon l'une des revendications précédentes, **caractérisé en ce que** le réservoir de liquide froid (14) peut s'écouler dans le réservoir de liquide chaud (13).

4. Procédé selon l'une des revendications précédentes, **caractérisé en ce que** le réservoir de liquide brûlant (15) peut s'écouler dans le réservoir de liquide chaud (13).

5. Procédé selon l'une des revendications précédentes, **caractérisé en ce que** le réservoir de liquide chaud (13) et le réservoir de liquide brûlant (15) sont divisés dans le sens d'écoulement.

6. Procédé selon l'une des revendications précédentes, **caractérisé en ce qu'**un autre réservoir (16, 17) est affecté à chaque réservoir de liquide chaud et brûlant (13, 15) pour l'écoulement du liquide.

7. Dispositif de mise en oeuvre du procédé selon l'une des revendications précédentes avec un dispositif de transport et plusieurs sections de traitement consécutives dans un pasteurisateur à tunnel, **caractérisé en ce que** l'eau des zones de chauffage (5 à 7) est amenée au moins en partie dans la zone respectivement suivante avec une température plus élevée et est évacuée au plus tard avant la zone de surchauffe (8) dans un premier réservoir (13) à température plus élevée et l'eau au moins de la zone de surchauffe (8) et/ou de la zone de pasteurisation (9) peut être amenée dans un deuxième réservoir (15) à température plus élevée et ce second réservoir (15) correspond avec un troisième réservoir supplémentaire (16), lequel est conçu comme réservoir à eau chaude avec un dispositif de chauffage et un quatrième réservoir (14) est prévu, dans lequel l'eau est amenée depuis la zone de refroidissement (12), cette eau pouvant être également amenée de façon forcée à la zone de chauffage (5) et l'eau du troisième réservoir (16) pouvant être amenée au moins à la zone de surchauffe et/ou à la zone de pasteurisation (8, 9).
